# FASCICULE DE BREVET EUROPEEN

(11) **EP 1 029 446 B1**
(45) Date de publication et mention de la délivrance du brevet: **09.04.2003**
(21) Numéro de dépôt: 00420031.7
(22) Date de dépôt: 14.02.2000
(51) Int. Cl.: A01G 27/06

(54) **Bac pour plante avec réserve d'eau**
Pflanzentopf mit Wasservorrat
Plant container with water reserve

(30) Priorité: 17.02.1999 FR 9902135
(43) Date de publication de la demande: 23.08.2000
(73) Titulaire: Riviera, 01100 Oyonnax (FR)
(72) Inventeur: Bianchi, Josiane, 1100 Oyonnax (FR)
(74) Mandataire: Maureau, Philippe

(56) Documents cités:
- EP-A- 0 171 889
- FR-A- 2 568 446
- GB-A- 2 127 264
- GB-A- 2 276 067
- US-A- 3 903 644
- US-A- 4 993 186

## Description

La présente invention concerne un bac pour plante, comprenant une réserve d'eau.

Il est bien connu d'aménager une réserve d'eau dans la partie inférieure d'un bac destiné à recevoir une plante. Le bac comprend alors une paroi horizontale qui le sépare en deux parties, à savoir une partie supérieure destinée à recevoir la terre et les racines de la plante et une partie inférieure destinée à contenir l'eau ; ladite paroi présente des cheminées faisant saillie de sa face inférieure ou comporte des mèches en matériau fibreux, qui trempent dans l'eau et permettent le passage de cette eau dans la terre par capillarité.

Le remplissage de la partie inférieure du bac est réalisé soit par une cheminée latérale qui débouche au niveau de la partie supérieure du bac, au dessus de la terre, soit par une ouverture dans la paroi latérale du bac, qui débouche dans la partie inférieure précitée de celui-ci.

Il est également connu de prévoir un indicateur du niveau de remplissage de cette partie inférieure du bac. Selon une forme de réalisation simple et pratique, cet indicateur est constitué par une fenêtre aménagée dans la paroi latérale du bac, qui est fermée de manière étanche par une plaquette en matériau transparent ou translucide. Le niveau d'eau peut ainsi être lu au travers de cette plaquette.

Ce type d'indicateur a pour problème pratique important de s'opacifier relativement rapidement, par suite du dépôt d'impuretés sur ladite plaquette transparente au fur et à mesure de l'absorption de l'eau par la plante. Ces impuretés résultent notamment de bactéries qui se développent dans l'eau au cours du temps ou de substances nutritives ajoutées dans cette eau. Outre l'aspect visuel guère attractif de ces dépôts, toute lecture du niveau de l'eau est relativement rapidement rendue impossible.

La présente invention vise à remédier à ce problème, sans pour autant complexifier la structure du bac et donc sans rendre ce dernier complexe et onéreux à fabriquer.

Le bac qu'elle concerne comprend, de manière connue en soi :
- une partie supérieure destinée à recevoir la terre et les racines de la plante et une partie inférieure destinée à contenir de l'eau ;
- des moyens pour permettre le passage de cette eau dans la terre ;
- une ouverture aménagée dans une paroi latérale du bac, permettant le versage de l'eau dans ladite partie inférieure du bac, et
- un indicateur de niveau de remplissage de cette partie inférieure, constitué par une fenêtre aménagée dans une paroi latérale du bac et par une pièce en matériau transparent, cette pièce venant clore cette fenêtre de manière étanche et permettant la vision du niveau de l'eau à travers elle.

Selon l'invention,
- ladite fenêtre est aménagée en dessous de ladite ouverture, et
- les dimensions de ladite ouverture sont telles qu'elles permettent le passage d'un moyen de nettoyage de la face interne de ladite pièce en matériau transparent.

Cette dernière peut ainsi être facilement nettoyée à partir de ladite ouverture, afin d'éliminer les impuretés qui tendent à l'opacifier. De cette manière, le niveau d'eau dans la partie inférieure du bac reste toujours parfaitement visible, et l'aspect visuel du bac ne se détériore pas au cours du temps.

En outre, le bac selon l'invention n'implique aucune contrainte de fabrication supplémentaire par rapport aux bacs existants.

Selon une forme de réalisation préférée de l'invention, l'ouverture présente des dimensions suffisantes pour le passage d'au moins un doigt de l'utilisateur.

Ce doigt constitue alors le "moyen de nettoyage" précité, de sorte que le nettoyage de la pièce en matériau transparent est particulièrement facile à réaliser.

Le bac peut comprendre un becquet fixe bordant ladite ouverture, qui forme un entonnoir de remplissage. Il peut également comprendre une trappe montée pivotante sur sa paroi dans laquelle est aménagée ladite ouverture, cette trappe étant reliée à deux parois latérales ; l'ensemble est monté pivotant entre une position d'ouverture, dans laquelle il constitue un becquet formant un entonnoir de remplissage, et une position de fermeture, dans laquelle la trappe vient clore ladite ouverture.

Pour sa bonne compréhension, l'invention est à nouveau décrite ci-dessous en référence au dessin schématique annexé représentant, à titre d'exemple non limitatif, deux formes de réalisation possibles du bac qu'elle concerne.
La figure 1 en est une vue en perspective, selon une première forme de réalisation ;
la figure 2 en est une vue partielle, à échelle agrandie, en coupe selon la ligne II-II de la figure 1 ;
la figure 3 en est une vue partielle, en perspective et à échelle agrandie, selon une deuxième forme de réalisation, et
la figure 4 en est une vue en coupe selon la ligne IV-IV de la figure 3.

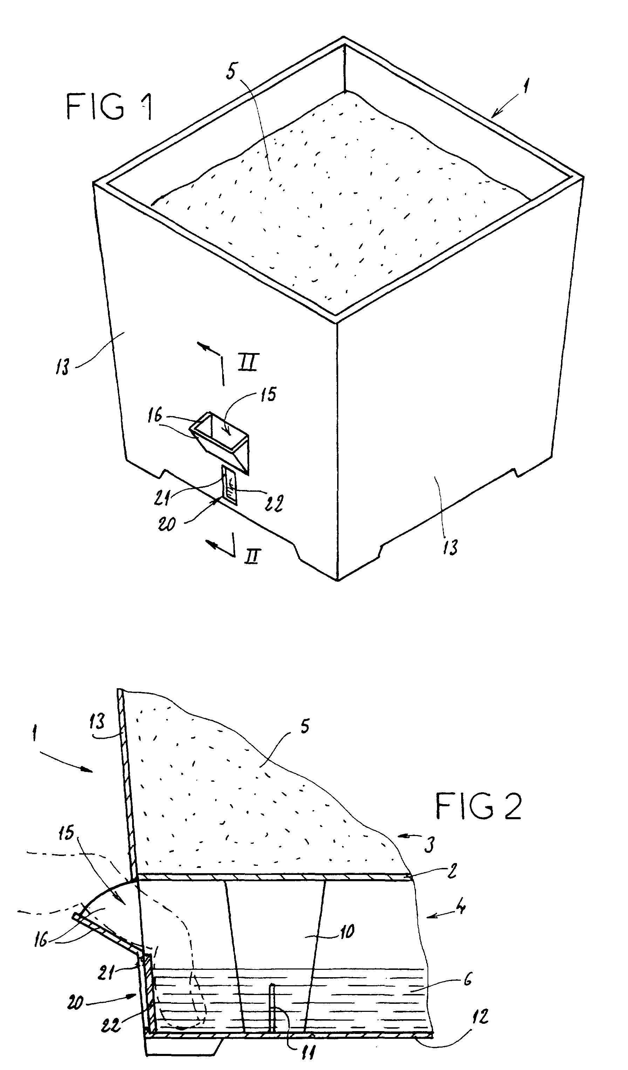

La figure 1 représente un bac 1 pour plante, comprenant une réserve d'eau.

Ainsi que le montre la figure 2, le bac 1 comprend une paroi transversale 2 le séparant horizontalement en deux parties 3, 4, à savoir une partie supérieure 3 destinée à recevoir la terre 5 et les racines de la plante et une partie inférieure 4 destinée à contenir l'eau 6.

La paroi 2 comprend une pluralité de cheminées 10 faisant saillie de sa face inférieure. Ces cheminées présentent des fentes 11 au niveau de leurs extrémités les plus éloignées de la paroi 2 et débouchent dans la partie 3. Elles reçoivent de la terre 5 et permettent ainsi le passage de l'eau dans cette terre 5 par capillarité.

La paroi 2 peut également comporter une pièce en matériau fibreux imputrescible, notamment une bande de tissu, dont une partie, en particulier la partie centrale, traverse la paroi 2 de manière à être au contact de la terre 5, et dont une autre partie, en particulier les extrémités, trempe dans l'eau 6 pour permettre le passage de l'eau dans la terre par capillarité. Un tel système est exploité par la société RIVIERA.

Dans l'exemple représenté, les cheminées 10 font corps avec la paroi 2 et reposent sur le fond 12 du bac 1. Elles permettent ainsi de déterminer la position de la paroi 2 dans ce bac 1, les dimensions de cette dernière étant telles que ses bords viennent à proximité immédiate des faces internes des parois latérales 13 du bac 1 lorsque les cheminées 10 sont en appui contre le fond 12.

Il apparaît aux figures que le bac 1 comprend une ouverture 15 aménagée dans l'une de ses parois 13. Cette ouverture 15 permet le remplissage de la partie 4 et est bordée par des parois 16 qui forment un becquet. Ce becquet constitue un entonnoir de remplissage, qui facilite le versage de l'eau.

L'ouverture 15 a une forme rectangulaire et des dimensions suffisantes pour permettre, ainsi que le montre la figure 2, le passage de l'index d'un utilisateur.

Le bac 1 comprend en outre un indicateur 20 du niveau de remplissage de la partie 4. Cet indicateur 20 est constitué par une fenêtre 21 et par une plaquette 22. La fenêtre 21 est aménagée dans la paroi 13 qui comprend l'ouverture 15, en dessous de cette ouverture. La plaquette 22 est en matériau transparent ou translucide, et est fixée de manière étanche à l'eau, notamment par collage ou thermosoudage, à cette même paroi 13.

La figure 2 montre que la fenêtre 21 est aménagée immédiatement en dessous de l'ouverture 15, de telle sorte que la face interne de ladite plaquette 22 puisse être nettoyée par le doigt de l'utilisateur engagé au travers de cette ouverture 15.

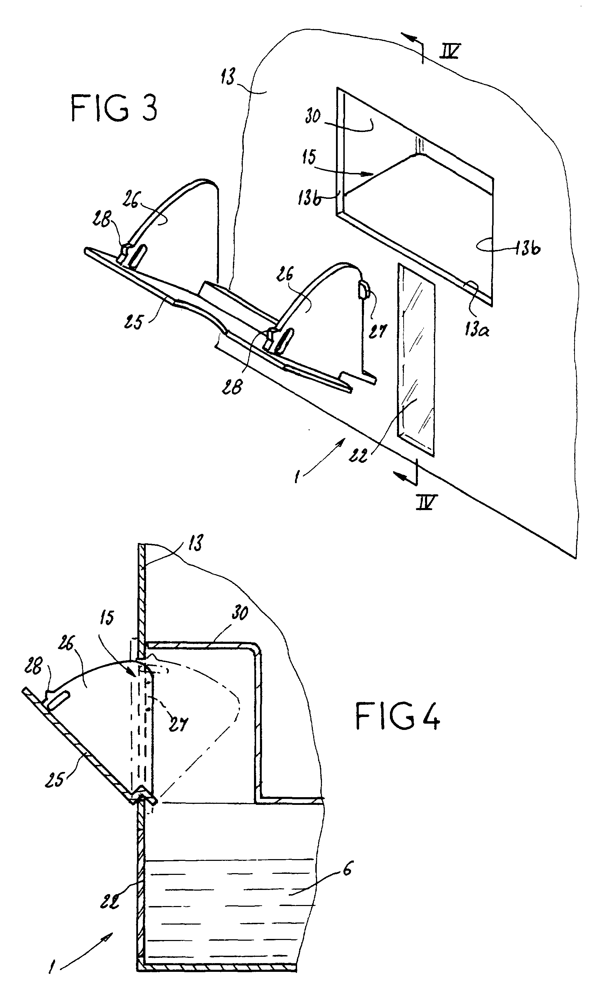

La figure 3 montre un bac 1 très similaire à celui décrit ci-dessus, sinon qu'il comprend une trappe pivotante 25 reliée à deux parois latérales 26 en forme de secteur de cercle. La trappe 25 comprend un renfoncement inférieur qui délimite un gradin, ce gradin permettant l'engagement de la trappe 25 sur le bord 13a de la paroi 13 qui délimite le côté inférieur de l'ouverture 15. Les parois 26 comportent deux ergots 27 sur leurs faces extérieures et au niveau de leurs côtés opposés à ceux reliés à la trappe 25, ainsi que deux ergots 28, faisant saillie de leurs bords supérieurs, du côté de la trappe 25. L'ensemble est réalisé en matière synthétique légèrement souple et élastique, de telle sorte que les parois 26 peuvent être fléchies l'une en direction de l'autre, pour permettre l'effacement des ergots 27 en deça des bords 13b de la paroi 13 qui délimitent latéralement l'ouverture 15. Cet ensemble peut ainsi être facilement monté sur le bac 1, en plaçant le gradin précité sur le bord 13a et en fléchissant les parois 26 pour effacer les ergots 27 en deça des bords 13b, puis en relâchant ces parois pour verrouiller lesdits ergots 27 derrière la paroi 13, ou peut être facilement retiré de ce bac 1, en fléchissant les parois 26. Une fois monté sur le bac 1, cet ensemble peut pivoter entre une position d'ouverture, dans laquelle il constitue un becquet tel que précité, et une position de fermeture, dans laquelle la trappe 25 vient clore ladite ouverture 15. Les ergots 28 s'engagent en force, par déformation élastique du matériau, derrière la paroi 13 et verrouillent la trappe 25 dans cette position de fermeture.

La clôture de cette ouverture 15 donne un aspect visuel parfait au bac, et le retrait dudit ensemble permet un large accès à la plaquette 22 en vue du nettoyage facile de celle-ci.

L'invention fournit ainsi un bac pour plante permettant de solutionner le problème d'opacification progressive de l'indicateur 20 par dépôt des impuretés que contient l'eau située dans la partie 4.

Il va de soi que l'invention n'est pas limitée à la forme de réalisation décrite ci-dessus à titre d'exemple mais qu'elle en embrasse au contraire toutes les variantes de réalisation. Ainsi, le bac pourrait comprendre un épaulement périphérique recevant la paroi 2, auquel cas les cheminées 10 pourraient ne pas reposer contre le fond 12 ; le bac 1 pourrait également avoir une structure en deux éléments délimitant chacun l'une des parties 3, 4 et pouvant être assemblés l'un à l'autre ; la paroi 2 peut comprendre, comme montré en figures 3 et 4, un "boîtier" 30 en regard de l'ouverture 15 ; la plaquette 22 peut être engagée dans la fenêtre 21.

## Revendications

1. Bac pour plante avec réserve d'eau, comprenant :
- une partie supérieure (3) destinée à recevoir la terre (5) et les racines de la plante et une partie inférieure (4) destinée à contenir de l'eau (6) ;
- des moyens (10, 11) pour permettre le passage de cette eau (6) dans la terre (5) ;
- une ouverture (15) aménagée dans une paroi latérale du bac (1), permettant le versage de l'eau (6) dans ladite partie inférieure (4) du bac, et
- un indicateur (20) de niveau de remplissage de cette partie inférieure (4), constitué par une fenêtre (21) aménagée dans une paroi latérale (13) du bac (1) et par une pièce (22) en matériau transparent ou translucide, cette pièce (22) venant clore cette fenêtre (21) de manière étanche et permettant la vision du niveau de l'eau à travers elle ;
bac (1) **caractérisé en ce que**
- ladite fenêtre (21) est aménagée en dessous de ladite ouverture (15), et
- les dimensions de ladite ouverture (15) sont telles qu'elles permettent le passage d'un moyen de nettoyage de la face interne de ladite pièce (22) en matériau transparent.

2. Bac selon la revendication 1, **caractérisé en ce que** l'ouverture (15) présente des dimensions suffisantes pour le passage d'au moins un doigt de l'utilisateur.

3. Bac selon la revendication 1 ou la revendication 2, **caractérisé en ce qu'**il comprend un becquet bordant ladite ouverture (15), qui forme un entonnoir de remplissage.

4. Bac selon l'une des revendications 1 à 3, **caractérisé en ce qu'**il comprend une trappe (25) montée pivotante sur sa paroi (13) dans laquelle est aménagée ladite ouverture (15), cette trappe (25) étant reliée à deux parois latérales (26) ; l'ensemble est conformé pour pouvoir être monté pivotant sur le bac (1) entre une position d'ouverture, dans laquelle il constitue un becquet formant un entonnoir de remplissage, et une position de fermeture, dans laquelle la trappe (25) vient clore ladite ouverture (15).

5. Bac selon l'une des revendications 1 à 4, **caractérisé en ce que** la paroi (2) comporte une pièce en matériau fibreux imputrescible, notamment une bande de tissu, dont une partie, en particulier la partie centrale, traverse la paroi (2) de manière à être au contact de la terre (5), et dont une autre partie, en particulier les extrémités, trempe dans l'eau (6) pour permettre le passage de l'eau dans la terre par capillarité.

## Claims

1. Plant container with a reserve of water, comprising:
- an upper part (3) intended to accommodate the soil (5) and the roots of the plant and a lower part (4) intended to contain water (6);
- means (10, 11) to allow this water (6) to pass into the soil (5);
- an opening (15) formed in a side wall of the container (1) to allow water (6) to be poured into the said lower part (4) of the container, and
- a fill level indicator (20) for this lower part (4), which indicator consists of a window (21) formed in a side wall (13) of the container (1) and of a piece (22) of transparent or translucent material, this piece (22) closing off this window (21) in a watertight manner and allowing the water level to be seen through it;
the container (1) being **characterized in that**
- the said window (21) is formed under the said opening (15), and
- the dimensions of the said opening (15) are such that they allow a means for cleaning the internal face of the said piece (22) of transparent material to pass.

2. Container according to Claim 1, **characterized in that** the opening (15) has large enough dimensions to allow at least one of the user's fingers to pass.

3. Container according to Claim 1 or Claim 2, **characterized in that** it comprises a spoiler bordering the said opening (15) and which forms a filling funnel.

4. Container according to one of Claims 1 to 3, **characterized in that** it comprises a hatch (25) mounted to pivot on its wall (13) in which the said opening (15) is formed, this hatch (25) being connected to two side walls (26); the assembly is shaped to be able to be mounted to pivot on the container (1) between an open position in which it constitutes a spoiler forming a filling funnel and a closed position in which the hatch (25) closes the said opening (15).

5. Container according to one of Claims 1 to 4, **characterized in that** the wall (2) comprises a piece made of rotproof fibrous material, particularly a band of fabric, of which a part, particularly the central part, passes through the wall (2) so as to be in contact with the soil (5) and of which another part, particular the ends, dips into the water (6) to allow the water to pass into the soil by capillary action.

## Patentansprüche

1. Trog für Pflanzen mit einem Wasserspeicher, wobei der Trog (1) aufweist:
- einen oberen Teil (3) zum Aufnehmen der Erde (5) und der Wurzeln der Pflanze sowie einen unteren Teil (4) zum Aufnehmen des Wassers (6);
- Mittel (10, 11) die einen Durchgang des Wassers (6) zu der Erde (5) ermöglichen;
- eine in einer Seitenwand (13) des Troges (1) angeordnete Öffnung (15), die ein Eingießen des Wassers (6) in den unteren Teil (4) des Troges (1) ermöglicht;
- eine Anzeigevorrichtung (20) für den Befüllungsstand des unteren Teils (4), die von einem in einer Seitenwand (13) des Troges (1) angeordneten Fenster (21) gebildet wird, sowie durch ein Element (22) aus durchsichtigem oder durchscheinendem Werkstoff, wobei dieses Element (22) das Fenster (21) dicht verschließt und eine Sicht durch es hindurch auf den Spiegel des Wassers (6) ermöglicht;
wobei der Trog (1) **dadurch gekennzeichnet ist, dass**
- das Fenster (21) unterhalb der Öffnung (15) angeordnet ist; und
- die Abmessungen der Öffnung (15) so dimensioniert sind, dass sie das Hindurchführen eines Mittels zum Reinigen der Innenoberfläche des Elementes (22) aus transparentem Werkstoff ermöglicht.

2. Trog nach Anspruch 1, **dadurch gekennzeichnet, dass** die Öffnung (15) ausreichende Abmessungen für das Hindurchführen mindestens eines Fingers des Benutzers aufweist.

3. Trog nach Anspruch 1 oder Anspruch 2, **dadurch gekennzeichnet, dass** er eine an die Öffnung (15) angrenzende Leitfläche aufweist, die einen Einfülltrichter bildet.

4. Trog nach einem der Ansprüche 1 bis 3, **dadurch gekennzeichnet, dass** er eine Klappe (25) aufweist, die schwenkbar an seiner Wand (13) befestigt ist, in der sich die Öffnung (15) befindet, wobei die Klappe (25) mit zwei Seitenwänden (26) verbunden ist; wobei ferner diese Anordnung so ausgebildet ist, dass sie zwischen einer Öffnungsstellung, in der sie eine einen Einfülltrichter bildende Leitfläche darstellt und einer Schließstellung, in der die Klappe (25) die Öffnung (15) verschließt, schwenkbar an dem Trog (1) befestigt werden kann.

5. Trog nach einem der Ansprüche 1 bis 4, **dadurch gekennzeichnet, dass** die Wand (2) ein Element aus faserigem, nicht-faulendem Werkstoff, insbesondere einen Streifen aus einem Gewebe, aufweist, von dem ein Abschnitt, insbesondere der mittlere Abschnitt, die Wand (2) durchdringt, derart, dass er in Kontakt mit der Erde (5) ist, und von dem ein anderer Abschnitt, insbesondere die Endabschnitte, in das Wasser (6) eingetaucht sind, damit das Wasser unter Kapillarwirkung in die Erde (6) gelangen kann.
